# DEMANDE DE BREVET EUROPEEN

(11) **EP 4 380 040 A1**
(43) Date de publication de la demande: **05.06.2024**
(21) Numéro de dépôt: 22211109.8
(22) Date de dépôt: 02.12.2022
(51) Int. Cl.: H02S 20/32

(54) **INSTALLATION PHOTOVOLTAÏQUE SUIVANT LA COURSE DU SOLEIL**

(71) Demandeur: Metaltech Legiret, 50680 Saint-Jean-de-Savigny (FR)
(72) Inventeur: LEGIRET, François-Eric, 14000 CAEN (FR); LECOMTE, Stéphane, 50160 TORIGNY LES VILLES (FR); LAURENT, Jérémie, 50160 SAINT AMAND VILLAGES (FR)
(74) Mandataire: AtlantIP International

(57) **Abrégé**

L'invention concerne une installation photovoltaïque (2) comportant une pluralité de panneaux solaires (21) portés par un châssis (22) orienté de manière fixe par rapport à un organe de pivotement (25) qui permet de faire pivoter le châssis (22) et les panneau solaire (21) autour d'un seul axe de rotation (O1) pour suivre la course diurne du soleil (SOL) dans le ciel. L'organe de pivotement (25) est positionné au sommet d'un mât (23) et mis en mouvement par le biais d'un seul actionneur pilotant la rotation des panneaux solaires (21) autour de l'axe de rotation (O1). En outre, l'invention adresse aussi une mise en sécurité de l'installation photovoltaïque (2) en cas de grand vent mesuré par un anémomètre et/ou une girouette (26) porté par l'installation photovoltaïque (2), la mise en sécurité consistant à faire tourner les panneaux solaire autour de l'axe de rotation (O1) de manière à ce que leur prise au vent soit minimale tout en privilégiant la position de production photovoltaïque maximale par rapport à la position du soleil.

## Description

Le contexte technique de la présente invention est celui des installations de panneaux solaires, et notamment des dispositifs permettant de suivre la course du soleil dans le ciel afin de conserver une inclinaison optimale. Plus particulièrement, l'invention a trait à une installation photovoltaïque et à un procédé de mise en sécurité.

Dans l'état de la technique, on connait des installations photovoltaïques qui comportent des panneaux solaires portés au sommet d'un mât par une structure articulaire permettant d'orienter les panneaux solaires dans une pluralité de directions afin d'optimiser une orientation vis-à-vis du soleil durant sa course diurne. Ces installations photovoltaïques sont complexes et mettent en oeuvre des systèmes multiaxes pour pouvoir parfaitement contrôler l'orientation des panneaux solaires à 90° par rapport à la position du soleil dans le ciel. De tels infrastructures sont certes efficaces mais onéreuses à construire et à piloter.

De telles installations sont notamment décrites dans les documents WO2016/134602 ou KR10-1160614A1.

En outre, pour de telles installations photovoltaïques, le vent peut être une source de danger et nuire à leur intégrité. Aussi, il est connu de définir une position de sécurité qui permet de réduire la prise au vent des panneaux solaires. Ces positions de sécurité sont aussi usitées en cas d'orage ou d'événements climatiques particuliers, tels que les orages ou les chutes de grêle. On connait notamment le document FR3091076A1 qui décrit une mise en sécurité avec un panneau solaire placé à l'horizontale en cas de grand vent.

La présente invention a pour objet de proposer une nouvelle installation photovoltaïque afin de répondre au moins en grande partie aux problèmes précédents et de conduire en outre à d'autres avantages.

Un autre but de l'invention est de réduire les coûts de fabrication tout en permettant une orientation vis-à-vis de la course diurne du soleil.

Un autre but de l'invention est de permettre une mise en sécurité efficace en cas de grand vent.

Selon un premier aspect de l'invention, on atteint au moins l'un des objectifs précités avec une installation photovoltaïque comportant :
- un ensemble de panneaux solaires supportés par un châssis ;
   - un organe de pivotement du châssis supportant les panneaux solaires, l'organe de pivotement permettant de faire tourner le châssis autour d'un seul axe de rotation, dit déclinaison ;
   - un mât supportant l'organe de pivotement à une extrémité longitudinale ;
   - un actionneur configuré pour définir une orientation angulaire du châssis autour de l'axe de déclinaison ;
   - une unité de commande configurée pour permettre de piloter l'orientation angulaire du châssis par l'actionneur en fonction de la course du soleil dans le ciel.

Dans le contexte de la présente invention, un panneau solaire est configuré pour convertir une énergie solaire en une énergie thermique et/ou électrique. Par énergie solaire, on comprend ici une énergie lumineuse transportée par le rayonnement solaire incident. D'une manière générale, le panneau solaire comporte une pluralité de capteurs solaires thermiques permettant de transformer l'énergie solaire en énergie thermique et/ou une pluralité de capteurs solaires photovoltaïques permettant de transformer l'énergie solaire en énergie électrique.

Dans le contexte de la présente invention, le châssis forme une structure porteuse pour les panneaux solaires. Les panneaux solaires sont fixés solidairement au châssis. Les dimensions et formes du châssis peuvent varier en fonction des usages et des puissances électriques et/ou thermiques recherchées. En particulier, le châssis peut présenter une forme polygonale ou elliptique, voire circulaire, pour les panneaux solaires qui sont fixés dessus. Une superficie des panneaux solaires couvrant le châssis est comprise entre quelques mètres-carrés et plusieurs dizaines de mètres carrés.

Dans le contexte de la présente invention, le mât supporte le châssis et les panneaux solaires. Le mât forme ainsi une structure porteuse qui est destinée à être ancrée dans le sol pour davantage de stabilité. Bien entendu, les dimensions du mât dépendent de la surface de panneaux solaires choisie. A titre d'exemples non limitatifs, une hauteur du mât, prise entre le sol et la plateforme sur laquelle repose le châssis, au niveau de son extrémité longitudinale, peut être comprise entre quelques mètres à plusieurs dizaines de mètres.

Dans le contexte de la présente invention, l'organe de pivotement est un organe mobile autorisant la rotation du châssis vis-à-vis de la plateforme sur laquelle repose l'organe de pivotement. L'organe de pivotement est placé dans une position intermédiaire entre le châssis et la plateforme du mât. Une partie fixe de l'organe de pivotement est fixé solidairement à la plateforme, et une partie mobile de l'organe de pivotement est fixée solidairement au châssis. Ainsi, l'organe de pivotement est moins complexe que les structures articulaires connues permettant de faire tourner les panneaux solaires autour de deux axes de rotation. Par suite, l'installation photovoltaïque est alors mois complexe et moins onéreuse à fabriquer et mettre en oeuvre.

Dans le contexte de la présente invention, l'actionneur peut prendre n'importe quelle forme, tel que par exemple un moteur ou un vérin. L'actionneur permet de motoriser l'organe de pivotement, de sorte à pouvoir passer d'une première configuration angulaire à une deuxième configuration angulaire de manière motorisée.

Dans le contexte de la présente invention, l'unité de commande collabore avec l'actionneur afin de piloter son fonctionnement et de pouvoir passer de la première configuration angulaire à la deuxième configuration angulaire de manière automatique. D'une manière générale, l'unité de commande comporte au moins un microcontrôleur et/ou au moins un microprocesseur et/ou un circuit intégré spécifique.

L'installation photovoltaïque conforme au premier aspect de l'invention comprend avantageusement au moins un des perfectionnements ci-dessous, les caractéristiques techniques formant ces perfectionnements pouvant être prises seules ou en combinaison :
- l'installation photovoltaïque conforme au premier aspect de l'invention comporte une batterie électrique reliée à l'actionneur et à l'unité de commande afin de fournir l'énergie électrique nécessaire au fonctionnement de ladite installation photovoltaïque, et/ou l'installation photovoltaïque est reliée électriquement à un réseau électrique fournissant ladite énergie électrique ;
- le mât comporte une structure en treillis coiffé par une plateforme supérieure au niveau de son extrémité longitudinale. Cette configuration avantageuse permet de réaliser une structure porteuse à moindre coût, présentant une moindre résistance au vent et garantissant une résistance mécanique équivalente ou supérieure aux mâts de type monopode connus ;
- la structure en treillis présente une forme pyramidale, une embase de la structure en treillis étant plus évasée que la plateforme supérieure située à l'extrémité longitudinale du mât. Cette configuration avantageuse procure davantage de sécurité et de stabilité. En particulier, la structure en treillis comporte (i) quatre poteaux répartis selon un plan en carré ou en rectangle et qui s'étendent longitudinalement vers le haut et, simultanément, vers l'intérieur du carré ou du rectangle respectivement, (ii) une pluralité d'entretoises qui relient deux poteaux adjacents. Alternativement, la structure en treillis comporte (i) trois poteaux répartis selon un plan en triangle et qui s'étendent longitudinalement vers le haut et, simultanément, vers l'intérieur du triangle, et (ii) une pluralité d'entretoises qui relient deux poteaux adjacents. D'une manière plus générale, la structure en treillis comporte (i) une pluralité de poteaux répartis selon une figure polygonale et qui s'étendent longitudinalement vers le haut et, simultanément, vers l'intérieur de la figure polygonale, et (ii) une pluralité d'entretoises qui relient deux poteaux adjacents ;
- la structure en treillis est composée d'au moins un matériau choisi parmi l'aluminium et/ou l'acier et/ou l'inox et/ou le bois ;
- la structure en treillis est préférentiellement une structure mécano-soudée ;
- le châssis comporte une infrastructure en treillis formant un plan d'appui pour les panneaux solaires. Cette configuration avantageuse permet de réaliser une structure porteuse à moindre coût, présentant une moindre résistance au vent et garantissant une résistance mécanique équivalente aux châssis connus mettant en oeuvre un ou plusieurs longerons.
- l'infrastructure en treillis présente une forme parallélépipédique. Cette configuration avantageuse permet de conférer la rigidité attendue pour supporter le poids des panneaux solaires. En particulier, l'infrastructure en treillis comporte (i) une pluralité de longerons d'appui formant une surface d'appui pour les panneaux solaires, (ii) une pluralité de longerons de renfort situés en retrait des longerons d'appui et s'étendant de manière parallèle auxdits longerons d'appui, (iii) une pluralité de traverses qui s'étendent entre les longerons d'appui et/ou les longerons de renfort, préférentiellement de manière perpendiculaire à eux, (iv) une pluralité de portées de renforts qui s'étendent de manière croisée entre les traverses. Les longerons d'appui et les longerons de renfort s'étendent selon la plus grande dimension du châssis supportant les panneaux solaires. Les longerons d'appui et les longerons de renfort prennent la forme de portées prismatiques, éventuellement creuses afin de limiter le poids de l'infrastructure en treillis. Les traverses s'étendent selon une plus petite dimension du châssis supportant les panneaux solaires. Les traverses prennent la forme de portées prismatiques, éventuellement creuses afin de limiter le poids de l'infrastructure en treillis.
- l'infrastructure en treillis est composée d'au moins un matériau choisi parmi l'aluminium et/ou l'acier et/ou l'inox.
- l'infrastructure en treillis est préférentiellement une structure mécano-soudée.
- le châssis est fixé solidairement à la plateforme du mât par l'intermédiaire de l'organe de pivotement, l'axe de rotation de l'organe de pivotement formant un angle compris entre 85° et 95° par rapport à un plan horizontal. Préférentiellement, l'axe de rotation forme un angle égal à 90° par rapport au plan horizontal. En d'autres termes, l'axe de rotation de l'organe de pivotement est préférentiellement vertical. Cette configuration avantageuse permet de faire pivoter les panneaux solaires selon un seul axe de rotation.
- afin d'orienter les panneaux solaires en direction du soleil, le châssis est monté sur l'organe de pivotement de manière inclinée, de sorte qu'un vecteur perpendiculaire aux panneaux solaires forme un angle - dit angle d'inclinaison - avec l'axe de rotation de l'organe de pivotement. Ainsi, l'installation photovoltaïque présente une configuration astucieuse et très économe dans laquelle un seul axe de rotation, vertical ou quasi-vertical, supporte un châssis incliné en fonction de la position du soleil, le suivi de la course du soleil étant ensuite réalisé par une rotation autour de l'axe de rotation de l'organe de pivotement ;
- de manière avantageuse, l'angle d'inclinaison est choisi en fonction d'un lieu d'établissement de l'installation photovoltaïque. En particulier, l'angle d'inclinaison est choisi comme étant égal ou sensiblement égal à la différence entre 90° et une latitude du lieu où l'installation photovoltaïque est mise en place ;
- l'actionneur est du type d'un actionneur électrique ou d'un actionneur hydraulique ou mécanique, l'actionneur permettant de faire pivoter le châssis supportant les panneaux solaires autour de l'axe de rotation de l'organe de pivotement ;
- l'installation photovoltaïque comporte une girouette et un anémomètre configuré pour mesurer une vitesse d'un vent s'écoulant à proximité de l'installation photovoltaïque ainsi qu'une direction d'écoulement dudit vent, l'unité de commande étant configurée pour orienter les panneaux solaires dans une position dite de sécurité, si la vitesse mesurée du vent dépasse une valeur seuil, la position de sécurité étant définie par une orientation des panneaux solaires de sorte à ce qu'ils présentent un profil minimal par rapport à la direction mesurée dudit vent. Par profil minimal, on comprend que la surface effective présentée au vent soufflant sur l'installation photovoltaïque est minimale. La surface effective est la surface de l'installation photovoltaïque prise dans un plan perpendiculaire à la direction du vent soufflant sur ladite installation photovoltaïque. En d'autres termes, la surface effective correspond à la projection de l'installation photovoltaïque dans un plan perpendiculaire à la direction du vent soufflant sur ladite installation photovoltaïque ;
- la position de sécurité est une position angulaire de l'organe de pivotement telle que, lorsque les panneaux solaires sont orientés dans cette position de sécurité, le vent s'écoulant autour de l'installation photovoltaïque, s'écoule de manière parallèle ou sensiblement parallèle aux longerons d'appui de l'infrastructure en treillis formant le châssis. Plus généralement, la position de sécurité définit une position angulaire de l'installation photovoltaïque pour laquelle l'écoulement du vent sur ladite installation photovoltaïque est le plus laminaire possible ;
- selon une première variante de réalisation, la girouette et l'anémomètre sont fixés solidairement à la plateforme supportant le châssis par l'intermédiaire de l'organe de pivotement. Selon une deuxième variante de réalisation, la girouette et l'anémomètre sont fixés solidairement aux panneaux solaires.

Selon un deuxième aspect de l'invention, il est proposé un procédé de mise en sécurité d'une installation photovoltaïque conforme au premier aspect de l'invention ou selon l'un quelconque de ses perfectionnements, le procédé de mise en sécurité comportant les étapes suivantes :
- une étape de mesure d'une vitesse de vent et d'une direction d'écoulement dudit vent ;
- une étape de comparaison de la vitesse mesurée du vent avec une valeur seuil ;
- si la vitesse mesurée du vent est supérieure à la valeur seuil, alors le procédé de mise en sécurité comporte une étape de mise en sécurité au cours de laquelle l'organe de pivotement est piloté de manière à orienter les panneaux solaires de sorte à ce qu'ils présentent un profil minimal par rapport à la direction mesurée dudit vent.

En d'autres termes, l'étape de mise en sécurité comporte une étape de rotation des panneaux solaires autour de l'axe de rotation de l'organe de pivotement jusqu'à orienter lesdits panneaux solaires et l'ensemble du châssis de manière longitudinale par rapport à la direction d'écoulement du vent autour de l'installation photovoltaïque.

La position de sécurité est une position angulaire de l'organe de pivotement telle que, lorsque les panneaux solaires sont orientés dans cette position de sécurité, le vent s'écoulant autour de l'installation photovoltaïque, s'écoule de manière parallèle ou sensiblement parallèle aux longerons d'appui de l'infrastructure en treillis formant le châssis.

Bien entendu, dans cette position angulaire déterminée vis-à-vis du vent, deux options demeurent possible pour l'orientation des panneaux solaires : une première option dans laquelle les panneaux solaires sont orientés selon une première direction vis-à-vis de l'axe de rotation de l'organe de pivotement, et une deuxième option, à 180° de la première option, dans laquelle les panneaux solaires sont orientés selon une deuxième direction vis-à-vis de l'axe de rotation de l'organe de pivotement. Dans le contexte de la présente invention, la position de sécurité préférée est l'option qui correspond à une meilleure exposition des panneaux solaires vis-à-vis du soleil, c'est-à-dire la position angulaire pour laquelle l'angle d'incidence entre les rayons du soleil et les panneaux solaires est la plus favorable, c'est-à-dire l'angle d'incidence le plus proche de 90°. En d'autres termes, la position de sécurité est choisie, parmi les deux options possible, comme étant celle qui permet de placer les panneaux solaire le plus face au soleil. Cette configuraion est particulièrement avantageuse car elle permet, même une fois mis en sécurité, de continuer à produire de l'électricité, même en position de sécurité, alors que les installations photovoltaïques connues ne cherchent pas et ne permettent pas à réaliser une telle optimisation.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue de profil d'un exemple de réalisation de l'installation photovoltaïque conforme au premier aspect de l'invention;
[Fig.2] illustre une vue en perspective de l'installation photovoltaïque illustrée sur la FIGURE 1 ;
[Fig.3] illustre une vue de face de l'installation photovoltaïque illustrée sur la FIGURE 1 lorsque ladite installation photovoltaïque est mise en sécurité ;
[Fig.4] illustre une vue de détail du mât de l'installation photovoltaïque illustrée sur les FIGURES 1 à 3 ;
[Fig.5] illustre une vue de détail du châssis supportant les panneaux solaires de l'installation photovoltaïque illustrée sur les FIGURES 1 à 3 ;
[Fig.6] illustre une vue synoptique du procédé de mise en sécurité conforme au deuxième aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

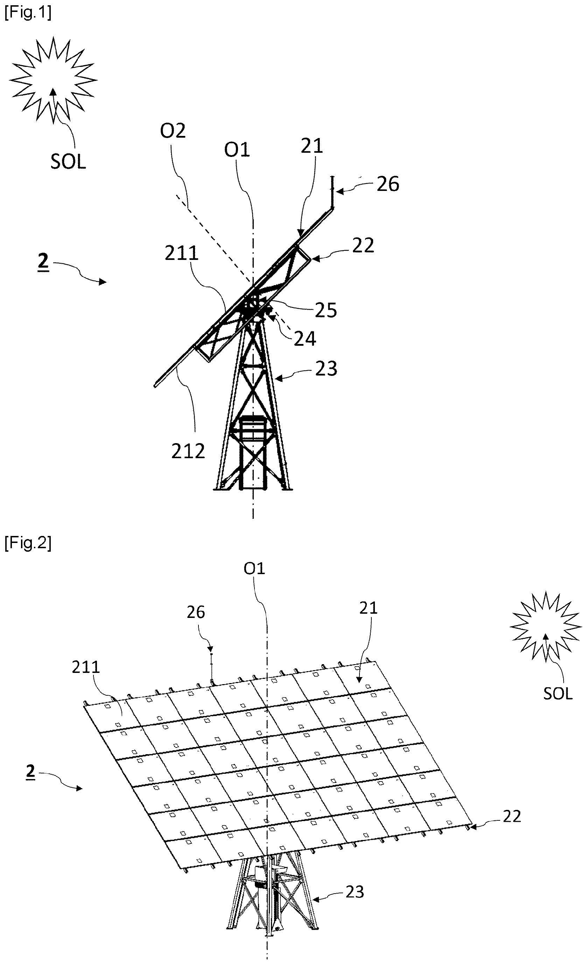

En référence aux FIGURES 1 à 3, l'invention adresse une installation photovoltaïque 2 comportant :
- un ensemble de panneaux solaires 21 supportés par un châssis 22 ;
- un organe de pivotement 25 du châssis 22 supportant les panneaux solaires 21, l'organe de pivotement 25 permettant de faire tourner le châssis 22 autour d'un seul axe de rotation O1, dit déclinaison ;
- un mât 23 supportant l'organe de pivotement 25 à une extrémité longitudinale ;
- un actionneur configuré pour définir une orientation angulaire du châssis 22 autour de l'axe de déclinaison ;
- une unité de commande configurée pour permettre de piloter l'orientation angulaire du châssis 22 par l'actionneur en fonction de la course du soleil SOL dans le ciel.

En outre, dans l'exemple de réalisation illustré sur les FIGURES, l'installation photovoltaïque 2 comporte aussi un anémomètre et/ou une girouette 26 configuré pour mesurer une vitesse et une direction d'un vent VT s'écoulant autour de ladite installation photovoltaïque 2.

Les panneaux solaires 21 sont fixés solidairement au châssis 22 par tout moyen. Le châssis 22 forme ainsi une structure d'assemblage des panneaux solaires 21. Dans l'exemple illustré sur les FIGURES 1 à 3, le châssis 22 permet d'assembler les panneaux solaires 21 dans un seul plan et selon une géométrie globale rectangulaire.

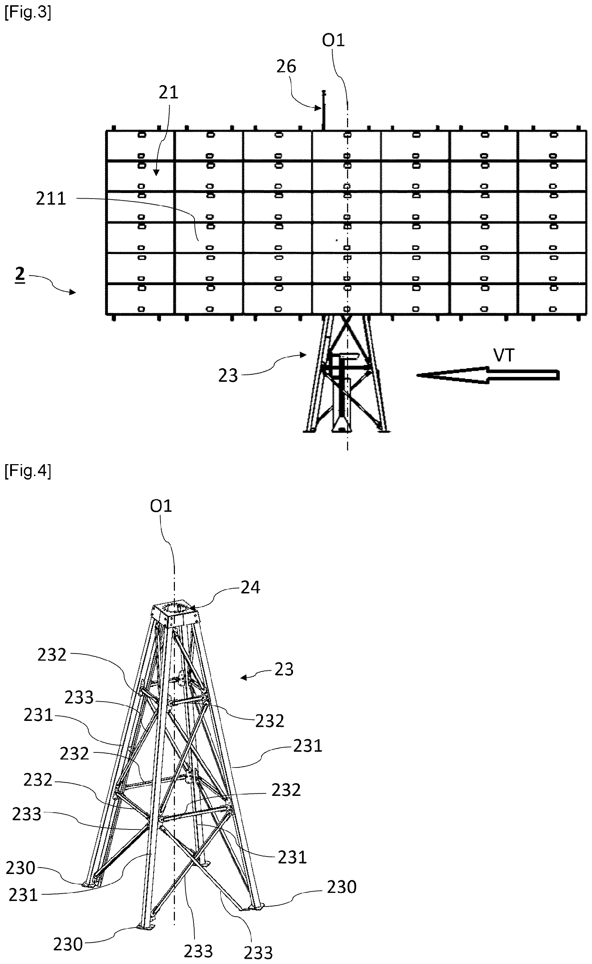

Les FIGURES 1 et 2 illustrent respectivement une vue de profil et une vue en perspective de l'installation photovoltaïque 2. La FIGURE 3 illustre une vue de face de l'installation photovoltaïque 2, correspondant à une mise en sécurité.

La mise en sécurité est mise en oeuvre lorsque l'anémomètre et/ou la girouette 26 détecte une vitesse de vent VT supérieure à une valeur seuil. Dans ce cas, il est nécessaire d'orienter l'installation photovoltaïque 2 selon une orientation spécifique qui réduit sa prise au vent VT. En d'autres termes, l'organe de pivotement 25 est configuré pour faire tourner les panneaux solaires 21 autour de l'axe de rotation O1 de manière à ce qu'ils soient orientés le plus parallèlement possible au vent VT qui souffle autour de l'installation photovoltaïque 2.

Plus particulièrement, l'installation photovoltaïque 2 est mise de profil par rapport à la direction d'écoulement du vent VT, comme visible sur la FIGURE 3. A titre d'exemple, la FIGURE 1 peut aussi représenter une mise en sécurité si le vent VT s'écoule de manière perpendiculaire au plan représenté sur la FIGURE 1.

Le pilotage de la station photovoltaïque est mis en oeuvre par l'unité de commande qui est reliée électriquement à une source d'énergie électrique, disponible via une batterie électrique ou via un réseau électrique auquel l'installation photovoltaïque 2 est connectée. L'unité de commande est aussi reliée à l'anémomètre et/ou la girouette 26 afin de pouvoir récupérer les valeurs de vitesse et d'orientation du vent VT mesuré.

En fonctionnement normal, l'unité de commande pilote l'organe de pivotement 25 afin d'orienter les panneaux solaires en direction du soleil SOL, durant sa course diurne. Plus particulièrement, l'unité de commande pilote l'organe de pivotement 25 afin de mettre en rotation l'installation photovoltaïque 2, et notamment son châssis 22 supportant les panneaux solaires 21, de manière synchrone avec la course du soleil SOL, de sorte à minimiser un angle d'incidence entre des rayons lumineux provenant du soleil SOL sur les panneaux solaires 21.

Le mât 23 de l'installation photovoltaïque 2 est décrit plus en détail en référence à la FIGURE 4. Le mat a pour fonction de mettre en hauteur les panneaux solaires afin de pouvoir les orienter dans la direction souhaitée. Le mât 23 prend la forme d'une structure d'élévation qui comporte, au niveau de son extrémité supérieure, une plateforme 24 au niveau de laquelle l'organe de pivotement 25 est fixé.

Le mât 23 comporte une structure en treillis formant une pyramide : une embase de la structure en treillis étant plus évasée que la plateforme 24 supérieure située à l'extrémité longitudinale du mât 23. L'embase est délimitée par les pieds 230 de la structure en treillis. Ces pieds 230 forment une assise et des points d'ancrage du mât 23 dans le sol sur lequel il repose.

Bien entendu, le mât 23 peut être avantageusement posé sur une fondation en béton pour davantage de stabilité.

Comme visible sur la FIGURE 4, la structure en treillis comporte :
- au moins trois, et préférentiellement quatre poteaux 231 répartis selon un plan en rectangle et qui s'étendent longitudinalement vers le haut et, simultanément, vers l'intérieur du rectangle. Les poteaux 231 forment des portées prismatiques rectilignes. Dans le contexte de l'invention, les poteaux 231 peuvent être monolithiques ou formés de plusieurs segments assemblés les uns aux autres. ;
- une pluralité d'entretoises 232 et de croisillons 233 qui relient deux poteaux 231 adjacents. Les entretoises 232 et les croisillons 233 permettent de rigidifier la structure en treillis formant le mât 23 et éviter qu'elle ne se déforme sous l'effet du poids du châssis 22 et des panneaux solaires 21 qui la coiffent. En particulier, les entretoises 232 et les croisillons 233 permettent de rendre la structure en treillis formant le mât 23 plus robuste au regard d'effets de torsion autour de l'axe de rotation O1.

Plus particulièrement, les entretoises 232 comportent des longerons qui s'étendent horizontalement entre deux poteaux 231 adjacents. Le mât 23 comporte avantageusement plusieurs longerons répartis à plusieurs hauteurs de la structure en treillis. Dans l'exemple de réalisation visible sur la FIGURE 4, la structure en treillis comporte un premier étage de longerons situé environ au premier tiers de la hauteur du mât 23, et un deuxième étage de longerons situé environ au deuxième tiers de la hauteur du mât 23.

En outre, les croisillons 233 prennent la forme d'armatures qui s'étendent de manière croisée entre deux poteaux 231 adjacents. Les croisillons 233 relient un des pieds 230 de la structure en treillis au premier étage de longerons, ou le premier étage de longerons au deuxième étage de longerons, ou encore le deuxième étage de longerons à la plateforme 24 supérieure du mât 23.

La structure en treillis formant le mât 23 est préférentiellement faite d'un assemblage métallique ou en bois. Dans le cas d'un assemblage métallique, la structure en treillis est préférentiellement du type d'une structure mécano-soudée.

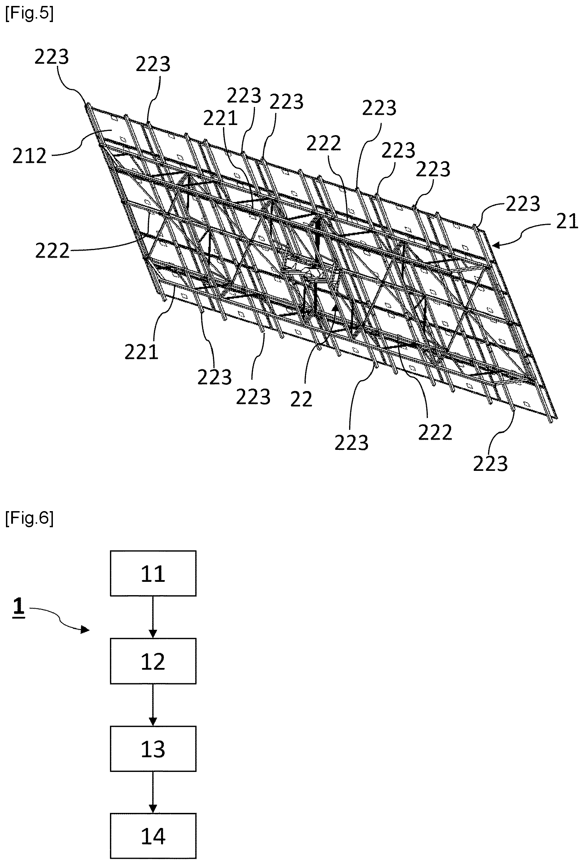

Le châssis 22 de l'installation photovoltaïque 2 est plus particulièrement décrit en référence à la FIGURE 5.

Le châssis 22 comporte une infrastructure en treillis formant un plan d'appui pour les panneaux solaires 21. Les panneaux solaires 21 sont ainsi fixés solidairement sur le châssis 22 au niveau de leur face d'appui 212 afin de pouvoir présenter leur face d'exposition 211 face au soleil SOL.

L'infrastructure en treillis formant le châssis 22 vise ainsi à permettre une fixation robuste et légère des panneaux solaires 21 du côté de leur face d'appui 212. A cet effet, l'infrastructure en treillis présente une forme qui peut varier en fonction de la géométrie souhaitée pour les panneaux solaires 21 supportés. D'une manière générale, afin de renforcer la rigidité du châssis 22, l'infrastructure en treillis a une forme générale parallélépipédique.

En particulier, l'infrastructure en treillis comporte :
- une pluralité de longerons d'appui 222 formant une surface d'appui 212 pour les panneaux solaires 21 et destinés à être mis en appui contre la face d'appui 212 correspondante des panneaux solaires 21 ;
- une pluralité de longerons de renfort 221 situés en retrait des longerons d'appui 222 et s'étendant de manière parallèle auxdits longerons d'appui 222, les longerons de renfort 221 formant un doublement des longerons d'appui 222 afin de rigidifier le châssis 22 et de former une structure porteuse parallélépipédique telle que citée précédemment ;
- une pluralité de traverses 223 qui s'étendent entre les longerons d'appui 222 et/ou les longerons de renfort 221, préférentiellement de manière perpendiculaire à eux, les traverses 223 s'étendant dans le plan formé par les logerons d'appui afin de former la surface d'appui 212 sur laquelle les panneaux solaires 21 sont fixés au niveau de leur face d'appui 212 ; et
- une pluralité de portées de renforts qui s'étendent de manière croisée entre les traverses 223. Les portées de renfort forment des entretoises 232 qui permette de rigidifier l'infrastructure en treillis formant le châssis 22.

Les longerons d'appui 222 et les longerons de renfort 221 s'étendent selon la plus grande dimension du châssis 22 supportant les panneaux solaires 21. Les longerons d'appui 222 et les longerons de renfort 221 prennent la forme de portées prismatiques, éventuellement creuses afin de limiter le poids de l'infrastructure en treillis. Les traverses 223 s'étendent selon une plus petite dimension du châssis 22 supportant les panneaux solaires 21. Les traverses 223 prennent la forme de portées prismatiques, éventuellement creuses ou ouvertes afin de limiter le poids de l'infrastructure en treillis.

L'infrastructure en treillis formant le châssis 22 est préférentiellement faite d'un assemblage métallique ou en bois. Dans le cas d'un assemblage métallique, l'infrastructure en treillis formant le châssis 22 est préférentiellement du type d'une structure mécano-soudée.

Par suite, le châssis 22 est fixé solidairement à la plateforme 24 du mât 23 par l'intermédiaire de l'organe de pivotement 25. Dans l'exemple de réalisation illustré sur les FIGURES, l'axe de rotation O1 de l'organe de pivotement 25 est vertical : il forme un angle égal à 90° avec le plan horizontal.

Il est ainsi possible de faire pivoter les panneaux solaires 21 autour de l'axe de rotation O1, et uniquement celui-ci. A la différence d'installations photovoltaïques connues beaucoup plus complexes et beaucoup plus onéreuses comportant deux ou trois axes de rotation afin de pouvoir orienter les panneaux photovoltaïques dans n'importe quelle direction, l'invention adresse ici une solution astucieuse et simplificatrice du problème technique du suivi de la course diurne du soleil SOL.

En effet, le châssis 22 est monté de manière inclinée sur l'organe de pivotement 25, de sorte à ce qu'un vecteur O2 perpendiculaire aux faces de réception des panneaux solaires 21 soit le plus possible normal avec la position du soleil SOL dans le ciel.

De manière avantageuse, l'angle d'inclinaison formé par le vecteur O2 et l'axe de rotation O1 est choisi en fonction d'un lieu d'établissement de l'installation photovoltaïque 2. En particulier, l'angle d'inclinaison est choisi comme étant égal ou sensiblement égal à la différence entre 90° et une latitude du lieu où l'installation photovoltaïque 2 est mise en place.

En référence à la FIGURE 6, l'invention adresse enfin un procédé de mise en sécurité 1 d'une installation photovoltaïque 2 conforme au premier aspect de l'invention ou selon l'un quelconque de ses perfectionnements, le procédé de mise en sécurité 1 comportant les étapes suivantes :
- une étape de mesure 11 d'une vitesse de vent VT et d'une direction d'écoulement dudit vent VT ;
- une étape de comparaison 12 de la vitesse mesurée du vent VT avec une valeur seuil ;
- si la vitesse mesurée du vent VT est supérieure à la valeur seuil, alors le procédé de mise en sécurité 1 comporte une étape de mise en sécurité 13 au cours de laquelle l'organe de pivotement 25 est piloté de manière à orienter les panneaux solaires 21 de sorte à ce qu'ils présentent un profil minimal par rapport à la direction mesurée dudit vent VT.

En d'autres termes, l'étape de mise en sécurité 13 comporte une étape de rotation 14 des panneaux solaires 21 autour de l'axe de rotation O1 de l'organe de pivotement 25 jusqu'à orienter lesdits panneaux solaires 21 et l'ensemble du châssis 22 de manière longitudinale par rapport à la direction d'écoulement du vent VT autour de l'installation photovoltaïque 2.

La position de sécurité est une position angulaire de l'organe de pivotement 25 telle que, lorsque les panneaux solaires 21 sont orientés dans cette position de sécurité, le vent VT s'écoulant autour de l'installation photovoltaïque 2, s'écoule de manière parallèle ou sensiblement parallèle aux longerons d'appui 222 de l'infrastructure en treillis formant le châssis 22, come décrit précédemment.

En synthèse, l'invention concerne une installation photovoltaïque 2 comportant une pluralité de panneaux solaires 21 portés par un châssis 22 orienté de manière fixe par rapport à un organe de pivotement 25 qui permet de faire pivoter le châssis 22 et les panneaux solaires 21 autour d'un seul axe de rotation O1 pour suivre la course diurne du soleil SOL dans le ciel. L'organe de pivotement 25 est positionné au sommet d'un mât 23 et mis en mouvement par le biais d'un seul actionneur pilotant la rotation des panneaux solaires 21 autour de l'axe de rotation O1. En outre, l'invention adresse aussi une mise en sécurité de l'installation photovoltaïque 2 en cas de grand vent VT mesuré par un anémomètre et/ou une girouette 26 porté par l'installation photovoltaïque 2, la mise en sécurité consistant à faire tourner les panneaux solaire autour de l'axe de rotation O1 de manière à ce que leur prise au vent VT soit minimale.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Installation photovoltaïque (2) comportant :
- un ensemble de panneaux solaires (21) supportés par un châssis (22) ;
- un organe de pivotement (25) du châssis (22) supportant les panneaux solaires (21), l'organe de pivotement (25) permettant de faire tourner le châssis (22) autour d'un seul axe de rotation (O1), dit déclinaison ;
- un mât (23) supportant l'organe de pivotement (25) à une extrémité longitudinale ;
- un actionneur configuré pour définir une orientation angulaire du châssis (22) autour de l'axe de déclinaison ;
- une unité de commande configurée pour permettre de piloter l'orientation angulaire du châssis (22) par l'actionneur en fonction de la course du soleil (SOL) dans le ciel.

2. Installation photovoltaïque (2) selon la revendication précédente, dans laquelle le mât (23) comporte une structure en treillis coiffé par une plateforme (24) supérieure au niveau de son extrémité longitudinale.

3. Installation photovoltaïque (2) selon la revendication précédente, dans laquelle la structure en treillis présente une forme pyramidale, une embase de la structure en treillis étant plus évasée que la plateforme (24) supérieure située à l'extrémité longitudinale du mât (23).

4. Installation photovoltaïque (2) selon la revendication précédente, dans laquelle la structure en treillis comporte :
- des poteaux (231) répartis selon une figure géométrique polygonale et qui s'étendent longitudinalement vers le haut et, simultanément, vers l'intérieur de la figure polygonale ;
- une pluralité d'entretoises (232) qui relient deux poteaux (231) adjacents.

5. Installation photovoltaïque (2) selon l'une quelconque des revendications précédentes, dans laquelle le châssis (22) comporte une infrastructure en treillis formant un plan d'appui pour les panneaux solaires (21).

6. Installation photovoltaïque (2) selon la revendication précédente, dans laquelle l'infrastructure en treillis comporte :
- une pluralité de longerons d'appui (222) formant une surface d'appui (212) pour les panneaux solaires (21) ;
- une pluralité de longerons de renfort (221) situés en retrait des longerons d'appui (222) et s'étendant de manière parallèle auxdits longerons d'appui (222)
- une pluralité de traverses (223) qui s'étendent entre les longerons d'appui (222) et/ou les longerons de renfort (221), préférentiellement de manière perpendiculaire à eux ;
- une pluralité de portées de renforts qui s'étendent de manière croisée entre les traverses (223).

7. Installation photovoltaïque (2) selon l'une quelconque des revendications précédentes, dans laquelle le châssis (22) est fixé solidairement à la plateforme (24) du mât (23) par l'intermédiaire de l'organe de pivotement (25), l'axe de rotation (O1) de l'organe de pivotement (25) étant compris entre 85° et 95° par rapport à un plan horizontal.

8. Installation photovoltaïque (2) selon la revendication précédente, dans laquelle le châssis (22) est monté sur l'organe de pivotement (25) de manière inclinée, de sorte qu'un vecteur (O2) perpendiculaire aux panneaux solaires (21) forme un angle - dit angle d'inclinaison - avec l'axe de rotation (O1) de l'organe de pivotement (25).

9. Installation photovoltaïque (2) selon l'une quelconque des revendications précédentes, dans laquelle l'installation photovoltaïque (2) comporte un anémomètre et/ou une girouette (26) configuré pour mesurer une vitesse d'un vent (VT) s'écoulant à proximité de l'installation photovoltaïque (2) ainsi qu'une direction d'écoulement dudit vent (VT), l'unité de commande étant configurée pour orienter les panneaux solaires (21) dans une position dite de sécurité, si la vitesse mesurée du vent (VT) dépasse une valeur seuil, la position de sécurité étant définie par une orientation des panneaux solaires (21) de sorte à ce qu'ils présentent un profil minimal par rapport à la direction mesurée dudit vent (VT).

10. Installation photovoltaïque (2) selon la revendication précédente, dans laquelle la position de sécurité est une position angulaire de l'organe de pivotement (25) telle que, lorsque les panneaux solaires (21) sont orientés dans cette position de sécurité, le vent (VT) s'écoulant autour de l'installation photovoltaïque (2), s'écoule de manière parallèle ou sensiblement parallèle aux longerons d'appui (222) de l'infrastructure en treillis formant le châssis (22).

11. Procédé de mise en sécurité (1) d'une installation photovoltaïque (2) selon l'une quelconque des revendications 9 ou 10, le procédé de mise en sécurité (1) comportant les étapes suivantes :
- une étape de mesure (11) d'une vitesse de vent (VT) et d'une direction d'écoulement dudit vent (VT) ;
- une étape de comparaison (12) de la vitesse mesurée du vent (VT) avec une valeur seuil ;
- si la vitesse mesurée du vent (VT) est supérieure à la valeur seuil, alors le procédé de mise en sécurité (1) comporte une étape de mise en sécurité (13) au cours de laquelle l'organe de pivotement (25) est piloté de manière à orienter les panneaux solaires (21) de sorte à ce qu'ils présentent un profil minimal par rapport à la direction mesurée dudit vent (VT).
